# EUROPEAN PATENT APPLICATION

(11) **EP 4 835 804 A1**
(43) Date of publication of application: **04.11.2026**
(21) Application number: 26171965.2
(22) Date of filing: 13.04.2026
(51) Int. Cl.: G06T 5/77, G06T 5/60

(54) **IMAGE-TO-IMAGE TEXT REMOVAL MODEL TRAINED ON OUTPUTS OF FINE-TUNED PRE-TRAINED MODELS**

(30) Priority: 30.04.2025 US 202563797781 P
(71) Applicant: Google LLC, Mountain View, CA 94043 (US)
(72) Inventor: Schmidli, Petra Poklukar, 8002 Zürich (CH); Wegner, Dawid Michal, 8002 Zürich (CH); Ormaniec, Weronika Malgorzata, 8002 Zürich (CH); Tonioni, Alessio, 8002 Zürich (CH); Stone, Thomas Jonathan, 8002 Zürich (CH)
(74) Representative: Marks & Clerk GST

(57) **Abstract**

Aspects of the present disclosure are directed to systems and methods for generating an inpainting model. The method can include obtaining a plurality of training data items including image and areas to be masked, the areas to be masked including areas of the image input without text. The method can also include fine-tuning a first pre-trained diffusion model to reconstruct masked areas of the image inputs and processing a plurality of first images that comprise text with a fine-tuned version of the first pre-trained diffusion model to generate a plurality of augmented first images. The method can further include fine-tuning a second pre-trained diffusion model using the plurality of first images and the plurality of augmented first images, the second pre-trained diffusion model configured to reconstruct the plurality of synthetic training data items and the second plurality of training data items without mask inputs.

## Description

### PRIORITY CLAIM

The present application is based on and claims priority to United States Provisional Application Number 63/797,781 having a filing date of April 30, 2025. Applicant claims priority to and the benefit of each of such application and incorporate all such application herein by reference in its entirety.

### FIELD

The present disclosure is generally related to text removal from input images. In particular, aspects of the present disclosure are related to the training of a text removal model via knowledge distillation using pre-trained diffusion models fine-tuned for the particular task of text removal.

### BACKGROUND

In text removal tasks, the goal is to remove text in a given image. Existing solutions to this problem lack global image context. Due to localized views of text, the inpainted background that replaces the text is often inconsistent with the rest of the image, of poor visual quality, or even fails to perform the text removal task. This problem can be exacerbated based on how tight input masks, or areas identified as areas to remove text from, are. For example, if the mask is too tight, some visual effects may not be removed from the image, such as not removing all text. If the mask is too loose, context that should not be removed from the image may be removed, such as removing portions of the background that should not have been removed. Additionally, loose masking may cause the system to not have context of other objects in the image, which may cause the system to remove not only the text but also background objects from the image.

### SUMMARY

Aspects and advantages of embodiments of the present disclosure will be set forth in part in the following description, or can be learned from the description, or can be learned through practice of the embodiments.

One example aspect of the present disclosure is directed to a computer-implemented method for generating an inpainting model. The method can include obtaining, by a computing system, a plurality of training data items, each data item of the plurality of training data items comprising an image input and a mask input, the mask input including a binary image indicative of one or more areas to be masked, the one or more areas to be masked include areas of the image input without text, in which the image input can include text regions and non-text regions. The method can also include fine-tuning, by the computing system, a first pre-trained diffusion model to reconstruct masked areas of the image inputs of the plurality of training data items, in which the masked areas can include the areas masked by the mask inputs, and processing, by the computing system, a plurality of first images that include text with a fine-tuned version of the first pre-trained diffusion model to generate a plurality of augmented first images, in which the plurality of augmented first can be descriptive of the plurality of first images with the text replaced with predicted background pixels. The method can further include fine-tuning, by the computing system, a second pre-trained diffusion model using the plurality of first images and the plurality of augmented first images, the second pre-trained diffusion model configured to reconstruct the plurality of synthetic training data items and the second plurality of training data items without mask inputs, in which fine-tuning the second pre-trained diffusion model can include processing the plurality of first images as inputs and evaluating outputs of the second pre-trained diffusion model based on the plurality of augmented first images.

In some implementations, the method can include training, by the computing system, a compact model via knowledge distillation based on outputs from a fine-tuned version of the second pre-trained diffusion model, the compact model configured to receive as an input an inference image and an inference mask input and output a version of the inference image without text based on the inference mask input. The method can include training, by the computing system, the compact model using real and synthetic training data. The compact model can have at least four channels. The first three channels can be associated with red-green-blue values of the inference image and the fourth channel being associated with the inference mask input. In some implementations, the inference mask input can be applied as an attention map for the compact model during inference performed by the compact model. The inference mask input can be a second binary image indicative of a second one or more areas to be masked, the second one or more areas to be masked comprising areas of text in the inference image.

In some implementations, fine-tuning the first pre-trained diffusion model can include inputting, by the computing system, a first training data item of the plurality of training data items into the first pre-trained diffusion model; receiving, by the computing system, a model output from the first pre-trained diffusion model based on the first training data item; evaluating, by the computing system, the model output based on a ground truth representation associated with the first training data item to obtain a loss term; and adjusting, by the computing system, the first pre-trained diffusion model based on the loss term.

In some implementations, the method can include identifying, by the computing system, areas of text in the image input of each of the plurality of training data items using optical character recognition and selecting, by the computing system, the one or more areas to be masked based on a non-text region. Identifying the areas of text in the image input of each of the plurality of training data items can include generating, by the computing system, a bounding box for each area of the areas of text in the image input and selecting, by the computing system, the one or more areas to be masked by selecting areas outside of the bounding box associated with each area of the areas of text.

Another example aspect of the present disclosure is directed to a computing system. The computing system can include one or more processors and a non-transitory, computer-readable medium comprising instructions that, when executed by the one or more processors, cause the one or more processors to perform operations. The operations can include obtaining a plurality of training data items, each data item of the plurality of training data items including an image input and a mask input, the mask input including a binary image indicative of one or more areas to be masked, in which the one or more areas to be masked can include areas of the image input without text, wherein the image input comprises text regions and non-text regions. The operations can also include fine-tuning a first pre-trained diffusion model to reconstruct masked areas of the image inputs of the plurality of training data items, in which the masked areas can include the areas masked by the mask inputs, and processing a plurality of first images that include text with a fine-tuned version of the first pre-trained diffusion model to generate a plurality of augmented first images, in which the plurality of augmented first can be descriptive of the plurality of first images with the text replaced with predicted background pixels. The operations can further include fine-tuning a second pre-trained diffusion model using the plurality of first images and the plurality of augmented first images, the second pre-trained diffusion model configured to reconstruct the plurality of synthetic training data items and the second plurality of training data items without mask inputs, in which fine-tuning the second pre-trained diffusion model can include processing the plurality of first images as inputs and evaluating outputs of the second pre-trained diffusion model based on the plurality of augmented first images.

In some implementations, the first pre-trained diffusion model and the second pre-trained diffusion model may have been pre-trained on the same training dataset. The operations can include training a compact model via knowledge distillation based on outputs from a fine-tuned version of the second pre-trained diffusion model. The compact model can be configured to receive as an input an inference image and an inference mask input and output a version of the inference image without text based on the inference mask input.

In some implementations, the operations can include training the compact model using real and synthetic training data. The operations can include processing an input image using the first fine-tuned diffusion model and the second fine-tuned diffusion model to obtain a processed output. The operations can include evaluating an output of the compact model based on the processed output. In some implementations, the operations can include adjusting one or more parameters of the compact model based on the evaluation of the output of the compact model.

In some implementations, the compact model can have at least four channels. The first three channels can be associated with red-green-blue values of the inference image and the fourth channel being associated with the inference mask input. The inference mask input can be a second binary image indicative of a second one or more areas to be masked. The second one or more areas to be masked can include areas of text in the inference image.

Another example aspect of the present disclosure is directed to a non-transitory, computer-readable medium including instructions that, when executed by one or more processors, cause the one or more processors to perform operations. The operations can include obtaining a plurality of training data items, each data item of the plurality of training data items including an image input and a mask input, the mask input including a binary image indicative of one or more areas to be masked, in which the one or more areas to be masked can include areas of the image input without text, in which the image input can include text regions and non-text regions. The operations can also include fine-tuning a first pre-trained diffusion model to reconstruct masked areas of the image inputs of the plurality of training data items, in which the masked areas can include the areas masked by the mask inputs, and processing a plurality of first images that comprise text with a fine-tuned version of the first pre-trained diffusion model to generate a plurality of augmented first images, in which the plurality of augmented first can be descriptive of the plurality of first images with the text replaced with predicted background pixels. The operations can also include fine-tuning a second pre-trained diffusion model using the plurality of first images and the plurality of augmented first images, the second pre-trained diffusion model configured to reconstruct the plurality of synthetic training data items and the second plurality of training data items without mask inputs, in which fine-tuning the second pre-trained diffusion model can include processing the plurality of first images as inputs and evaluating outputs of the second pre-trained diffusion model based on the plurality of augmented first images.

In some implementations, the operations can include training a compact model via knowledge distillation based on outputs from a fine-tuned version of the second pre-trained diffusion model. The compact model can be configured to receive as an input an inference image and an inference mask input and output a version of the inference image without text based on the inference mask input.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1A depicts a block diagram of an example text removal process according to example embodiments of the present disclosure.
Figure 1B depicts an illustration of an example text removal process according to example embodiments of the present disclosure.
Figure 1C depicts an illustration of an example input-output instance of a trained model according to example embodiments of the present disclosure.
Figure 2A depicts a block diagram of an example training process for a text removal model according to example embodiments of the present disclosure.
Figure 2B depicts a block diagram of an example distillation training process for a compact model according to example embodiments of the present disclosure.
Figure 2C depicts a block diagram of an example model inference for a text removal model according to example embodiments of the present disclosure.
Figure 3 depicts a flow chart diagram of an example method to perform training of a text removal model according to example embodiments of the present disclosure.
Figure 4 depicts a flow chart diagram of an example method to perform text removal from an image according to example embodiments of the present disclosure.
Figure 5A depicts a block diagram of an example computing system that performs text removal according to example embodiments of the present disclosure.
Figure 5B depicts a block diagram of an example computing system that performs text removal according to example embodiments of the present disclosure.

Reference numerals that are repeated across plural figures are intended to identify the same features in various implementations.

### DETAILED DESCRIPTION

Generally, the present disclosure is directed text removal from input images using a text removal model, especially for systems that will perform other operations on input images, such as translation rendering. The text removal model can receive an input image that includes text regions and non-text regions, as well as a mask image that indicates areas of the input image to remove text from using, for example, bounding boxes defined by a user. The text removal model can identify text in the indicated areas of the image and then remove the text using diffusion by inpainting a consistent background in the indicated areas or by using other inpainting techniques.. The identified text can be translated with a machine-learned translation model to generate translated text. The translated text can then be rendered within the inpainted image to generate a translated version of the original image. The translated text rendering may include style alignment to mirror the font, size, and/or alignment of the original text.

Aspects of the present disclosure provide a means for generating a text removal model that is both globally aware of the entire image such that inpainted backgrounds are consistent with the rest of the image while properly removing text in defined areas of an image. Given an input image that is unmasked, the model can be aware of the entire global context of the image and properly inpaint a background based on a secondary, binary mask input image that defines one or more regions of the input image to be inpainted.

To accomplish this goal, a compact text removal model can be generated by fine-tuning robust, pre-trained diffusion models and then using knowledge distillation to distill a more compact, efficient model (e.g., a compact model that comprises magnitudes of parameters less than the one or more teacher models) that meets processing demands on computing devices while still maintaining a high level of performance and robustness for removing text.

A first diffusion model can be fine-tuned based on a real training data set that includes input images and binary masks associated with each image, each binary mask identifying one or more non-text regions of the image. The fine-tuning on the first diffusion model can train the model to properly inpaint the non-text regions and be globally aware of the input image. The first diffusion model can then be used to generate augmented input images as an additional augmented training data set.

A second diffusion model can then be fine-tuned based on both the original training data set and the augmented training data set, where the second diffusion model is fine-tuned to reconstruct the original training data set and the augmented training data set without text without using a mask input. After the second diffusion model is fine-tuned, a compact model can be trained to generate outputs that emulate that output generation from the second diffusion model.

Existing solutions to text removal lack global image context. Due to localized views of text, the inpainted background that replaces the text is often inconsistent with the rest of the image, of poor visual quality, or even fails to perform the text removal task. This problem can be exacerbated based on how tight input masks, or areas identified as areas to remove text from, are. For example, if the mask is too tight, some visual effects may not be removed from the image, such as not removing all text. If the mask is too loose, context that should not be removed from the image may be removed, such as removing portions of the background that should not have been removed.

Therefore, aspects of the proposed invention can solve these and other issues by first fine-tuning a diffusion model to learn to inpaint masked portions of the background of images. The model can be used to generate augmented images as an additional training set for a second diffusion model, which can be fine-tuned based on both the training data used to fine-tune the first diffusion model and the generated augmented images to reconstruct the images in the data sets without text without needing to use a masked input. The dual fine-tuning can allow for a compact model to be generated based on one or both of the diffusion models via knowledge distillation, creating a compact model that can be contextually aware of the entire image for proper background inpainting.

Additionally, aspects of the proposed invention do not fully occlude a text region for inpainting as existing solutions do. Instead, optical character recognition masks are utilized as a guide for removing text through diffusion. This allows for a more accurate recreation of the background behind the removed text and allows the diffusion model to be globally aware of the image context, instead of simply identifying a local region and occluding that region for text removal.

The generated compact model, during inference, can utilize optical character recognition bounding boxes (and/or masks generated based on optical character recognition) only as a guide to performing inpainting via diffusion or other techniques. In contrast, existing models tend to fully occlude the text region (e.g., by setting the pixels of the text region to a specific value). By not occluding the text region during inference, the compact model can identify text within the regions while being globally aware of the image background, resulting in a more consistent and higher quality inpainted background.

Aspects of the present disclosure provide a number of technical advantages over the prior art. In particular, the knowledge distillation process allows for a more robust and effective model to be created while distilling the model down to a model that can meet performance requirements of computing devices, such as smartphones. Furthermore, the compact model can be smaller in memory size than the diffusion models, and therefore requires less memory to store and less bandwidth to transmit to a variety of other computing devices. The fine-tuning of the first diffusion model using masks of non-text areas allows the first diffusion model to be trained to more accurately reproduce the backgrounds of images, helping to reduce the failures of existing models in only partially and/or incorrectly removing text from images and/or recreating a background that is inconsistent with the rest of the image, while avoiding the need of using human-curated datasets of images with and without text during training, making the training semi-autonomous. Moreover, the systems and methods can leverage both real world data and synthetically-generated data for training and fine-tuning, which can lead to the generated models being more robust in handling unique input images and masks than existing solutions. Additionally, the use of pre-trained models that are then fine-tuned allows the compact model to benefit from the powerful prediction capabilities of a pre-trained diffusion model without incurring the computational cost of training a diffusion model from the ground up.

The present disclosure can relate generally to machine learning models, and more specifically to image-to-image models for text removal in digital images.

Removing text from digital images can be performed for various image processing purposes, such as to generate a clean background before overlaying translated text. Some systems may process images in a patch-based manner. In such systems, regions of an image that include text can be cropped into smaller patches, and these patches may be individually processed. A patch-based approach, however, may have a limited global context, which can result in visual artifacts and inconsistencies. For example, because each patch may be processed in isolation, such systems can have difficulty creating a coherent background, particularly for elements like shadows or large objects that span multiple patches. Other approaches may utilize large-scale generative models, such as diffusion models, for text inpainting. However, such general-purpose models may not be specifically optimized for text removal tasks and can sometimes generate text-like characters instead of a plausible background. Some methods may involve masking the text regions of an input image before processing. This masking process can remove image information from the masked area, which can limit the model's ability to leverage the full context of the image and may amplify errors from an upstream text detection system.

The methods and systems disclosed herein can be related to a multi-stage training framework for generating an image-to-image inpainting model for text removal. An example framework can include sequentially fine-tuning multiple diffusion models to address challenges related to data scarcity for this task. For instance, a first pre-trained diffusion model can be fine-tuned on a reconstruction task involving non-text regions of an image. This resulting model may then be used to generate a dataset of images with text removed. This dataset can subsequently be used to train a second diffusion model that processes entire, unmasked images to produce text-free outputs. The second model may then be distilled into a more compact model.

Certain text removal systems can face technical challenges. For example, some patch-based models that process small image crops may lack global context, which can lead to inconsistent results or artifacts, particularly with complex backgrounds. In other examples, general-purpose diffusion models tasked with inpainting masked text regions may regenerate plausible-looking but unwanted text, as such models can be trained on large datasets where text is a common feature. These models may not be configured to replace text with background content. The disclosed technologies herein can address certain of these challenges by providing a training methodology that can be used to generate a full-image model with a bias to reconstruct background textures in place of text, using a set of images to generate its own training data.

In some implementations, a background-reconstruction bias may be introduced into a generative model. This can be accomplished, for example, by fine-tuning a pre-trained diffusion model on a particular reconstruction task. In this task, the model can be trained to inpaint masked areas that do not contain text. By supervising the model's output based on these non-text regions, the model can learn a bias to generate background textures and patterns when it encounters a masked input, as opposed to generating other semantically plausible content that could include text. This biased model can then function as a data generation tool, capable of generating text-free versions of images to create a training dataset.

An example method can include fine-tuning a first pre-trained diffusion model to reconstruct masked, non-text areas of various training images. This fine-tuned first model may then be used to process a set of images containing text, generating a corresponding set of augmented images where the text is replaced with predicted background pixels. Subsequently, a second pre-trained diffusion model can be fine-tuned using the original images as inputs and the augmented, text-free images as supervision targets. Training the second model on full, unmasked input images can allow it to perform text removal while leveraging a larger image context, which may improve the quality of the output. In some implementations, the knowledge from this second model can be distilled into a smaller, more efficient compact model suitable for deployment on various computing devices (e.g., servers, mobile phones, wearable devices). This compact model can be controlled, for example via an input mask, to selectively remove specific portions of text.

The systems and methods disclosed herein can be utilized for generating an inpainting model for text removal in natural images. Certain implementations provide a framework that may address challenges associated with approaches that rely on synthetic training data or patch-based processing, which can result in visual artifacts and a reduced ability to generalize to diverse scenarios encountered in real-world images. One aspect can involve a multi-stage training pipeline, where a sequence of diffusion models can be progressively trained and utilized to generate training data. This knowledge can then be distilled into a compact, production-ready model. This process can begin by creating a specialized training dataset to bias a general-purpose diffusion model towards background reconstruction. This biased model can then be used to generate a pseudo-labeled dataset for training a second, context-aware model. The second model's outputs can be used to train a compact model suitable for certain real-time applications.

An initial stage of a method can involve obtaining, by a computing system (e.g., a server, a desktop computer, a distributed computing system), a plurality of training data items configured to train a pre-trained model to inpaint background textures rather than generating new text. This can address a scenario where some pre-trained generative models, when tasked with inpainting a masked region where text was previously located, may attempt to generate new, non-semantic text, as their training data has taught them that such areas (e.g., storefront signs, labels) sometimes contain text. To counteract this, a training data item can include an image input and a corresponding mask input. The mask input can be a binary image that indicates one or more areas to be masked that are selected from non-text regions of the image input. To generate these training items, a source image containing both text and non-text regions can be processed. An optical character recognition (OCR) system, or a similar text detection module, may be used to identify bounding boxes around the text regions. The areas for the mask input can then be programmatically selected from regions known to be devoid of text. In some implementations, a technique can be used to improve the realism of the non-text masks in shape and distribution. This can involve taking a second, unrelated image, identifying its text bounding boxes, and superimposing these bounding boxes onto the first source image. The areas of these superimposed boxes that do not intersect with the original text boxes of the source image can be selected as the non-text areas to be masked. This process can provide training masks that have a shape and layout similar to that of real text, but for which the underlying ground-truth pixels are known to be background, thereby creating a suitable training scenario for background reconstruction.

With this specialized training data, the system can then fine-tune a first pre-trained diffusion model. This first model can be a generative model, such as a latent diffusion model, which has been pre-trained on a vast dataset of general images and possesses image generation capabilities. The fine-tuning process can involve a masked reconstruction task. For a training item, the areas of the image input specified by the mask input (the non-text areas) can be masked out, for instance, by replacing the pixels with random noise or a constant color value. This masked image can then be fed into the first pre-trained diffusion model. The model's task can be to reconstruct, and/or inpaint, the masked-out regions. An aspect of the training is that a loss function, which guides the model's adjustments, can be computed by comparing the model's output against the original pixels in these known non-text regions. Through this process, the diffusion model can be trained or biased to learn that when it encounters a masked region, its task is to reconstruct the background, not to generate text-like structures. This fine-tuning process may involve various implementations; for example, in some implementations, the actual text regions in the image input can be masked out during this training step to prevent the model from learning from the text, while in other embodiments, the text regions are left visible to provide additional context. This fine-tuning step can produce a specialized diffusion model adapted for background inpainting.

After the first pre-trained diffusion model has been fine-tuned, the fine-tuned first pre-trained diffusion model can be used in a subsequent stage to generate a large-scale, pseudo-labeled dataset. A computing system can process a new, large plurality of first images, which can be representative of the real-world images a final model may be expected to handle (e.g., photographs of street signs, screenshots, book covers). These first images can contain text that is targeted for removal. For each of these images, an OCR system can be used to identify the actual text regions and generate corresponding masks. These text regions can then be masked out in the images. The fine-tuned version of the first pre-trained diffusion model can then be used to perform inference on this plurality of masked first images. Because of its specialized training, the model can inpaint the masked text regions with plausible background pixels. The output of this process can be a plurality of augmented first images, where each augmented image is a version of a corresponding original first image but with the text computationally removed and replaced by a predicted background. This collection of original images paired with their text-free augmented counterparts can form a pseudo-labeled dataset for a subsequent training stage.

A subsequent step can involve fine-tuning a second pre-trained diffusion model using the pseudo-labeled dataset created in the previous stage. This second pre-trained diffusion model can be of the same architecture as the first or a different one, and the second pre-trained diffusion model can start with general generative capabilities. The fine-tuning process for this second model can be implemented as follows. The system can use the plurality of first images (the original images with text) as the inputs for the model, and the plurality of augmented first images (the pseudo-inpainted images without text) as the supervision targets. In some implementations, the input images may not be masked. The second diffusion model can thereby be trained to perform the text removal task while having access to the complete visual context of the original image, including the text itself. This training approach can allow the model to learn about image structure, context, and cues surrounding text, which may lead to an improved quality of inpainting. This can mitigate challenges associated with previous stages, where a large mask could obscure context (e.g., if text spans across a person's face). The model can learn to perform text detection and removal in a single, holistic process. In some embodiments, to create a more refined dataset, multiple models from the first and second stages can be used to generate several inpainting candidates for a curated set of images. Human reviewers or an automated quality metric can then select a preferred output for each image, resulting in a smaller but higher-quality dataset that can be used to train a teacher model.

A further stage can address operational constraints of production deployment. The fine-tuned diffusion models, while producing high-quality results, can be computationally intensive or may not meet certain latency requirements (e.g., under 50 milliseconds) of some real-time applications. Accordingly, the system can perform knowledge distillation to transfer aspects of a "teacher" model (e.g., the fine-tuned second diffusion model or an ensemble of models) into a smaller, faster "student" model, referred to as a compact model. The teacher model can be used to generate a large dataset, potentially containing hundreds of thousands or millions of image tuples. An image tuple may include the original image, an edit mask, the inpainted image from the teacher model, and a predicted character mask. The compact model, which may have a more efficient architecture such as a U-Net, can then be trained on this large-scale dataset. In some implementations, this training can be enhanced by mixing the pseudo-labeled real data with a set of synthetic training data to improve the model's ability to adhere to edit masks.

The compact model can be configured for controllable and efficient inference. In some implementations, the model can be configured to receive an inference image and a separate inference mask input. For example, the inference image and the inference mask can be provided as distinct inputs. The compact model may have an input structure with at least four channels, where three channels can correspond to the Red-Green-Blue (RGB) color values of the full, un-masked inference image, and a fourth channel can be associated with the binary inference mask. This inference mask, which indicates the specific text regions to be removed, may operate without erasing pixels in the input. Instead, the inference mask can act as a form of guidance or condition that directs the model's internal processing. The inference mask can direct the model's processing to the desired areas for inpainting, which can allow for control over which text is removed, enabling functionalities like partial text removal within a sentence. This approach can preserve the context of the original image for the model to use during inference, which can combine some benefits of context-aware processing with the controllability that may be desired by applications like live translation, where only the translated text should be removed while other text is preserved. The compact model can be further trained to output not only the inpainted image but also an auxiliary character mask, which can delineate the pixels corresponding to the removed characters. This can be useful for certain downstream rendering pipelines that composite the inpainted result back onto a client device (e.g., a smartphone, smart watch, wearable device, augmented reality glasses).

In some implementations, a computing system (e.g., a server, a cloud computing platform, a desktop computer) can be configured to generate a text inpainting model using a multi-stage training framework. The framework may facilitate the generation of a compact and efficient model capable of producing high-quality inpainting results. This framework can be implemented to address certain challenges associated with some prior methods that may rely on synthetic data or patch-based processing.

In a first stage, a first-stage diffusion model can be fine-tuned to favor background reconstruction over text generation. For this process, a training dataset can be created from a collection of images containing text. For each training image, a set of non-text regions can be identified for masking. These non-text regions can be defined by superimposing text bounding boxes from a different image onto the current training image and selecting areas that do not intersect with the actual text of the current image. This process can generate realistic masks over non-text areas. The pixels within these non-text masks can then be obscured (e.g., replaced with random noise) in the input image. A pre-trained latent diffusion model can then be fine-tuned on a number of such samples, for example, approximately 2,000 samples. The model can be trained on a reconstruction task, applying a supervision signal to the masked non-text regions for which a ground truth is available. As a result, the fine-tuned model can learn to inpaint background textures in a masked region, which may reduce instances of hallucinating new text that can occur with some generic pre-trained models.

In a second stage, the fine-tuned model from the first stage can be used as a pseudo-labeler to generate a training dataset for a second-stage diffusion model. The first-stage model can process a set of images containing text by masking the actual text regions and outputting images with the text replaced by predicted background. The outputs from the first-stage model, which may contain some artifacts, can serve as pseudo-ground truth data. A second pre-trained latent diffusion model can then be fine-tuned on these (original_image_with_text, pseudo_inpainted_image) pairs. This second-stage model can be trained in a "mask-free" manner, wherein it can receive the un-masked original image as input. This approach can allow the model to leverage a more complete global context of the image, which can improve the reconstruction of backgrounds and objects, for instance, those that might have been partially or fully obscured by large masks in the previous stage.

In a third stage, a curated dataset can be generated through a human-in-the-loop process. For example, a set of images, such as diverse, real-world images, can be selected. Each image can be processed by an ensemble of models, such as models developed in the previous stages (e.g., two versions of the first-stage model and two versions of the second-stage model). This process can generate multiple inpainting candidates for each source image. Human raters can then review the candidates and select a preferred output for each image. This selection process can be supplemented with other techniques, for example, dilating masks to handle text with certain visual effects or using a patch-based model for small regions of text (e.g., on screenshots). The process can result in a curated dataset of, for example, (original_image, inpainted_image) pairs.

In a fourth stage, a teacher model can be trained using the curated dataset from the third stage. This model can be, for example, another fine-tuned latent diffusion model configured for controllable inpainting. The teacher model can take as input a multi-channel tensor, for example, a four-channel tensor comprising three channels corresponding to the un-masked input image (e.g., RGB channels) and a fourth channel containing a binary edit mask that specifies one or more text regions for removal. This edit mask can act as a condition or a hint to the model, rather than being used to obscure input pixels. This configuration can allow the model to process the image context, including the text to be removed, which may improve reconstruction quality and reduce artifacts that can be associated with hard-masking. The configuration may enable a degree of control, for example, removing a single word from a sentence. A resulting teacher model may demonstrate high-quality text removal, and in some configurations, it may be more computationally intensive than is suitable for certain real-time applications.

In a fifth stage, knowledge from the teacher model can be distilled into a student model. The student model can be configured to be more compact or efficient, making it suitable for certain production environments. The teacher model can be used to generate a large-scale dataset. Each training tuple can include an original image, an edit mask, the inpainted image output by the teacher, and an approximated "character mask." The character mask, which may be utilized by a downstream rendering pipeline, can be generated by, for example, computing a pixel-wise difference between the original and inpainted images. A student model, which may be a compact architecture such as a UNet or a Palette-type diffusion model, can then be trained on this large-scale dataset. The student model can be optimized for lower latency using techniques such as progressive distillation, which can reduce the number of diffusion steps, in some cases to as few as one step. A resulting production model may achieve a latency of, for example, under 50 milliseconds per image, while retaining a high degree of the inpainting quality exhibited by the teacher model. This can make the model effective for some large-scale deployments.

An example technical problem solved by example implementations of aspects of the present disclosure may include challenges related to generating high-quality training data for image inpainting models. Some conventional approaches for training such models may utilize paired datasets of images with text and corresponding ground-truth images without text. For "in-the-wild" images captured in diverse, uncontrolled environments, such ground-truth data may not be readily available. Attempts to create this data synthetically can be unsuccessful, as synthetic data generators may struggle to realistically replicate complex real-world phenomena, for example, shadows, lighting variations, and occlusions. This can result in a distribution gap between the training data and real-world inference data. Furthermore, using certain pre-trained generative models, such as diffusion models, to create this data can be difficult, as these models may be biased to generate text in plausible locations (e.g., on a storefront sign) rather than remove it. This may lead the models to hallucinate new, nonsensical text. Training an inpainting model on such data may result in a model that produces visual artifacts, fails to generalize well, and exhibits poor overall performance.

Example implementations of aspects of the present disclosure may provide technical solutions to this problem by implementing a multi-stage process for creating a pseudo-ground-truth dataset. For instance, a computing system can be configured to obtain training data items where mask inputs are defined to correspond to areas of an image without text. The system can then fine-tune a first pre-trained diffusion model on the task of reconstructing these masked non-text areas. This training process can alter the behavior of the diffusion model, biasing it toward reconstructing background textures rather than hallucinating text. This specially-biased model may then be used to process a plurality of real-world images that contain text, thereby generating a corresponding plurality of augmented images where the text has been replaced with a plausible background. This controlled process for generating a biased model can provide a technical means to create a large-scale, high-fidelity training dataset that can be more representative of in-the-wild images. This may result in the technical effect of enabling the training of an improved downstream inpainting model, which can produce outputs with fewer artifacts and generalize better to diverse, real-world conditions, thereby improving the functioning of the computer system.

Another example technical problem solved by example implementations of aspects of the present disclosure may include the potential loss of image context in certain masked inpainting approaches. Some image inpainting systems may operate by masking a region to be inpainted in the input image, for instance, by replacing pixels corresponding to text with random noise or a constant color. This masked image can then be provided to the inpainting model. One technical challenge with this approach is that the model may be deprived of visual information from the original masked region. When the masked area is large, or when it occludes complex underlying structures (e.g., text written across a person's face or an intricate pattern), the model may lack sufficient context to perform a plausible reconstruction. This can lead to an under-constrained problem where the model may produce blurry, inconsistent, or visually jarring outputs that are not consistent with the surrounding unmasked areas.

Example implementations of aspects of the present disclosure may provide technical solutions to this problem by training a model configured to perform inpainting without a masked input, thereby preserving additional image context. For example, subsequent to a first fine-tuned diffusion model generating a set of augmented images, a second pre-trained diffusion model can be fine-tuned. This second fine-tuning step can use original, un-masked images as inputs and the generated augmented images as supervision targets. Because the second model can be trained without mask inputs, it can learn to perform the inpainting task while having access to more of the visual information of the input image, including the text regions. The model can learn to associate the presence of text in the input with the corresponding background reconstruction from the augmented image targets. This can result in the technical effect of producing a model capable of improved background reconstruction, particularly for large text regions or text that occludes complex objects. The resulting inpainting quality can be improved, with fewer artifacts and more coherent outputs, which may stem from the specific training process that can avoid the loss of information associated with input masking.

Another example technical problem solved by example implementations of aspects of the present disclosure may include the high computational cost and latency associated with some large-scale diffusion models, which can make them difficult to deploy in resource-constrained production environments. While certain large diffusion models can be trained to produce high-quality image inpainting results, their iterative denoising process can be computationally intensive, potentially requiring significant processing power and time. For real-time applications, such as on-the-fly visual translation on a computing device (e.g., a smartphone, a wearable device, augmented reality glasses, etc.), which may have strict latency budgets (e.g., 50 milliseconds per image), serving a large model can be technically challenging. This can create a trade-off where high-quality results may be achievable in research environments but difficult to deploy at scale, leading some production systems to use less computationally demanding models that may produce lower-quality results.

Example implementations of aspects of the present disclosure may provide technical solutions to this problem by using knowledge distillation to create a more computationally efficient inpainting model. For example, a system can train a compact model via knowledge distillation based on outputs from the fine-tuned second diffusion model, which can act as a "teacher" model. The teacher model can be used to process a large dataset to generate a number of input-output pairs (e.g., original image and edit mask as input, inpainted image as output). This generated dataset can then serve as training data for the compact "student" model, which may be a different, more efficient architecture such as a U-Net. This distillation process can transfer inpainting capabilities of the larger teacher model to the smaller student model. This may produce the technical effect of a resulting model configured for text removal that can operate with reduced latency and computational overhead, thereby enabling its deployment in a real-time, resource-constrained production system. This can allow the system to address the technical challenge of deployment by providing high-fidelity results within certain operational constraints.

Some implementations can relate to a multi-stage training framework that can leverage a sequence of generative models to create training data for an inpainting task. For example, an implementation may include biasing a first generative model by fine-tuning it on a reconstruction task for non-target regions, using the biased first model to generate a set of pseudo-ground-truth training pairs, and subsequently training one or more downstream models on these generated pairs. A downstream model may, for instance, be a compact student model configured for efficient inference. While some examples may describe using diffusion models, U-Net architectures, or specific conditioning mechanisms like a fourth input channel mask, the described systems can be implemented using various generative model architectures, such as transformers or other encoder-decoder structures, and different conditioning methods, including cross-attention or other forms of guidance. Furthermore, the functions and components of the system can be combined, further separated, or distributed differently than in the specific examples shown. The system can be implemented at various scales, from a compact, resource-constrained model operating on a single device (e.g., a smartphone, a wearable device, augmented reality glasses, or a vehicle computing system) to a large-scale, distributed system deployed in a cloud, on-premise, or hybrid architectural environment. The implementation may be in the form of software executing on general-purpose processors, dedicated hardware such as an Application-Specific Integrated Circuit (ASIC) or Field-Programmable Gate Array (FPGA), or a combination thereof. In addition to text removal, the described methods may be applicable to a range of image and video processing tasks, for example, general object removal, image restoration, data augmentation, and other image-to-image translation problems. The disclosed systems and methods may therefore not be limited in scope by the specific embodiments described herein, which are intended as illustrations of individual aspects of the disclosure.

In some examples, fine-tuning a pre-trained diffusion model can serve to bias the model to reconstruct background textures instead of text. A standard pre-trained diffusion model, when presented with a masked-out area where text could appear, such as on a storefront sign, may attempt to hallucinate or reconstruct text based on its training on large datasets. An initial fine-tuning process may be used to counteract this tendency by training the model on a reconstruction task for non-text regions. For example, by masking out non-text regions of an image that have shapes and locations similar to text regions, the model can be supervised to reconstruct the original background in those masked regions. This can cause the model to learn a preference for inpainting background. In some implementations, a number of training examples, such as 2,000, may be sufficient to assist in biasing the model away from text generation and towards background reconstruction when presented with a masked input during an inference task.

In some examples, a compact model may refer to a model configured to operate within certain production latency requirements for user-facing applications. For instance, a compact model may be a student model that can process an image of approximately 800,000 to 1,000,000 pixels (e.g., an image padded to a 1024x1024 resolution) with a p50 latency of 50 milliseconds or less. Such a compact model may be implemented, for example, as a U-Net architecture trained with perceptual and discriminator-based losses, or as a progressively distilled diffusion model that has been distilled to perform an inpainting task in a reduced number of diffusion steps, such as in a single step. This level of performance may allow the model to be deployed in a feature, such as a live camera-based translator on a computing device (e.g., a smartphone, wearable device, augmented reality glasses), and perform text removal without introducing a delay that is perceptible to a user.

With reference now to the Figures, example embodiments of the present disclosure will be discussed in further detail.

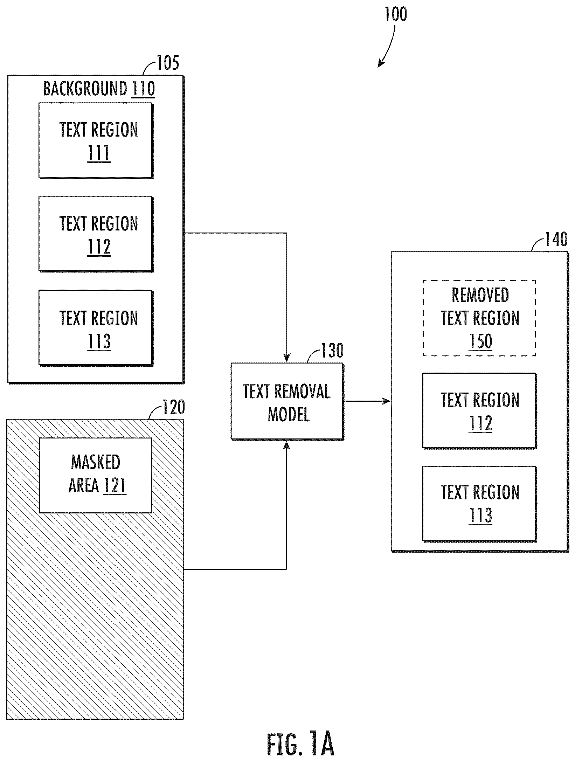

Figure 1A depicts a block diagram of an example text removal process 100 according to example embodiments of the present disclosure. An input image 105 that includes a background 110 and one or more text regions 111, 112, and 113 can be obtained. The input image 105 can be any sort of image that includes both text and non-text regions, such as a handwriting sample, an advertisement, a magazine cover, a book cover, a menu, or any other image that includes text and non-text regions.

A mask input 120 can also be obtained. The mask input 120, in some embodiments, can be a binary image, or a black and white image, that defines one or more areas of the input image 105 to remove text from, such as masked area 121. The masked area 121 can be defined, for example, by a bounding box that is generated by a user, indicating one or more regions of the input image 105 that the user wishes to remove text from.

The input image 105 and the mask input 120 can be input into a text removal model 130. In some embodiments, the text removal model 130 can be a diffusion model trained to identify text within the masked area 121 and replace the text within the masked area 121 with an inpainted background that is consistent with the background 110 of the input image 105. For example, given the input image 105 and the mask input 120, the text removal model 130 can generate an output image 140, which is a version of the input image 105 that has text identified by the masked area 121 removed (removed text region 150), the removed text region 150 having a background inpainted to match a portion of the background 110 that previously was the background to the text region 111. The text removal model 130 can be configured to process the full input image 105 without masking occlusion and can utilize the mask input 120 as a guide to identify which region of the input image to remove text from via inpainting prediction.

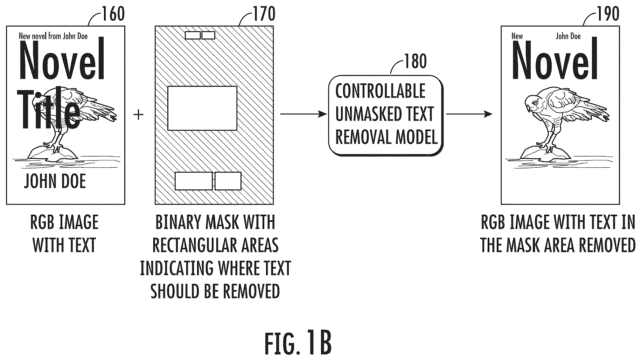

Figure 1B depicts an illustration of a second example text removal process according to example embodiments of the present disclosure. As described above, an input image 160 can be received along with a binary mask 170 that indicates areas of the input image where text should be removed. The input image 160 and the binary mask 170 can be input into an unmasked text removal model 180, which can generate output image 190 with text removed from the areas indicated in the binary mask 170.

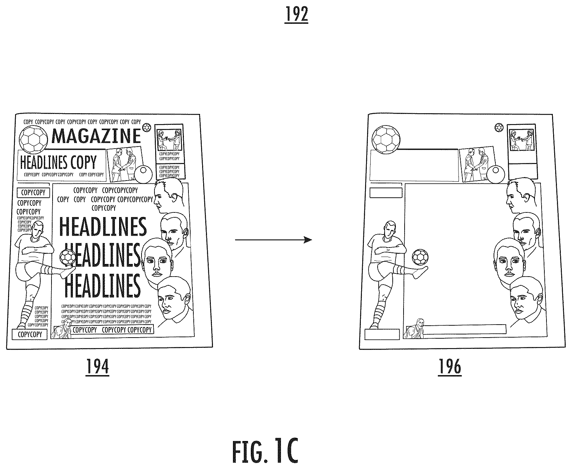

Figure 1C depicts an illustration of an example input-output instance 192 of a trained model according to example embodiments of the present disclosure. In particular, the depicted input-output instance 192 of a trained model includes an input image 194 and an output image 196. The input image 194 can include text of different sizes, colors, fonts, structure, and/or stylization. The text removal model disclosed herein can process the input image 194 to generate an output image 196 that includes an inpainted version of the input image 192 with the text removed and replaced with predicted background pixels.

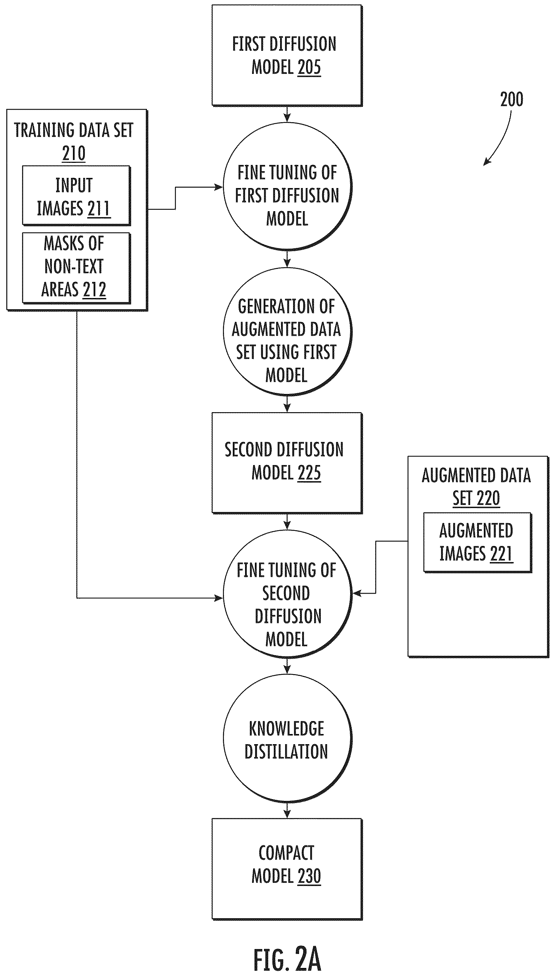

Figure 2A depicts a block diagram of an example training process 200 for a text removal model according to example embodiments of the present disclosure. A first diffusion model 205 can be obtained. The first diffusion model 205 can be, in some embodiments, a pre-trained masked diffusion model that receives, from a training data set 210, input images 211 and corresponding masks of non-text areas 212 of the input images 211. The first diffusion model 205 may be a pre-trained diffusion model trained on general image generation tasks, which may include image masking generation, image restoration, and/or text-to-image tasks.

Given the input images 211 and the masks of non-text areas 212, the first diffusion model 205 can be fine-tuned by supervising output reconstructions of the input images 211 only on the non-text regions defined by the masks of non-text areas 212. Fine-tuning a model involves training a model on a smaller, targeted dataset to adapt the model's existing knowledge from prior training to a specific task or use case.

The task for the first diffusion model is to recover the original background of the input images based on the masks of the non-text areas 212. To mask out the non-text areas, in some embodiments, the pixels of the non-text areas can be replaced with a constant value, which the first diffusion model 205 then uses as a basis for reconstructing the original background of the input images 211. This step biases the first diffusion model 205 to predict background pixels and de-emphasize existing reconstruct text predictions.

In some embodiments, the training data set 210 can also include masked inputs for areas of text in the input images 211. In these embodiments, even though text areas are masked, the first diffusion model 205 still only reconstructs the non-text areas defined by the masks of non-text areas 212 based on the learned background prediction task bias.

The first diffusion model 205 can then be used to generate an augmented data set 220. In particular, the first diffusion model 205 can be used to generate augmented images 221 by generating "pseudo-pairs" of images and images without text. In some embodiments, the augmented images 221 can include image-image without text pairs that include one or more faults, or flaws, in text removal, such as only partially removing text or warped text that is not removed.

The augmented data set 220 can then be used to fine-tune a second diffusion model 225. The second diffusion model 225 can be, in some embodiments, a pre-trained unmasked diffusion model that is configured to receive only the augmented images 221 without any mask inputs and attempt to reconstruct the image without text. Based on the comparison of the output of the second diffusion model 225 and the image without text, the second diffusion model 225 can be fine-tuned using one or more loss functions (e.g., a variety of loss functions) to more accurately recreate the images without text.

In some embodiments, the second diffusion model 225 can also be trained using real data, such as the training data set 210, when the real data includes image-image without text pairs.

The result of the fine-tuning of both the first diffusion model 205 and the second diffusion model 225 is a fine-tuned model that can receive as input an image with and/or without a mask to generate an image with at least a portion of text removed. For example, the result of the fine-tuning of both the first diffusion model 205 and the second diffusion model 225 is a fine-tuned model that can receive as input an image and a mask input that defines one or more areas of the image to have text removed from the defined areas. The output of the fine-tuned model can be an image with text in the defined areas removed.

The use of pre-trained models that are not specialized before the fine-tuning can mean that the pre-trained models are general diffusion models, which can have millions or billions of parameters and large computational overhead. To meet performance requirements on computing devices, such as edge computing devices or other computing devices with less processing capacity than large training computing systems, a compact model 230 can be generated based on the second diffusion model 225 using knowledge distillation. In some embodiments, the compact model 230 can be a diffusion model.

Knowledge distillation is a process of model compression by which a large model with millions or billions of parameters and high computational cost can be reduced, or "distilled," into a smaller model with less parameters and computational cost. A smaller "student" model can learn to mimic the outputs of a larger "teacher" model and can leverage the knowledge of the teacher model to obtain similar or higher accuracy outputs as the teacher model using less parameters and computational capacity. Generally, the student model can have a smaller architecture than the teacher model (less layers and neurons per layer, a quantized version of the teacher model, a smaller network with an optimized global network architecture, and the like).

To train the student model, both the teacher model and the student model can be provided the same input, and the outputs of the models can be compared. Based on this comparison, a distillation loss term can be determined and used to modify the weights, parameters, or other aspects of the student model to better mimic the teacher model.

The compact model 230 therefore can be generated by taking a model of similar but smaller architecture to the second diffusion model 225 and training the compact model 230 to mimic the output of the second diffusion model 225 using the same inputs. In some embodiments, this can include providing real training data to the models (e.g., training data set 210 or other similar data sets). In further embodiments, the compact model 230 can also be trained using synthetic data sets, such as the augmented data set 220 or other data sets. The use of synthetic data sets aids the compact model 230 in precisely reconstructing an input image in identified mask areas.

The resulting compact model 230 can then be utilized to remove text from input images. The compact model 230 can receive an input image and a mask input defining one or more regions of the input image to remove text from. The compact model 230, in some embodiments, can utilize optical character recognition on the areas identified in the mask input to recognize text in the defined areas. The compact model 230 can then utilize diffusion to inpaint the defined areas with a background consistent with the defined area while removing the text present in that area. The compact model 230 can be controllable by the user, as the user has full control over defining the areas in the mask input for inpainting, so that only desired areas of text are removed from the input image. The compact model 230 also does not rely on the input image being masked itself (e.g., having one or more bounding boxes present in the input image). Instead, the compact model 230 receives an unmodified input image and the mask input, allowing the compact model 230 to see the entire context of the input image for background inpainting. This is in contrast to typical inpainting models, where pixels in the input image corresponding to the mask are set to constant values.

In some embodiments, the compact model 230 can receive an input image on three channels for red, green, blue values of the input image. The compact model 230 can then receive the mask input on a fourth channel. During inference performed by the compact model 230, the mask input can be applied using an attention layer of the compact model 230 as an attention map. An attention map is a visualization that can define which areas of the input image the compact model 230 should focus on when performing diffusion.

Knowledge distillation may be performed based on outputs of the first diffusion model 205 and/or the second diffusion model 225. In some implementations, a plurality of first diffusion models 205 may be fine-tuned on the first fine-tuning technique, and a plurality of second diffusion models 225 can be fine-tuned on the second fine-tuning technique. The compact model 230 can then be trained based on outputs of at least a subset of the plurality of first diffusion models 205 and at least a subset of the plurality of second diffusion models 225. The knowledge distillation may include evaluating the outputs of the plurality of fine-tuned models then selecting one or more particular outputs to utilize for compact model 230 training.

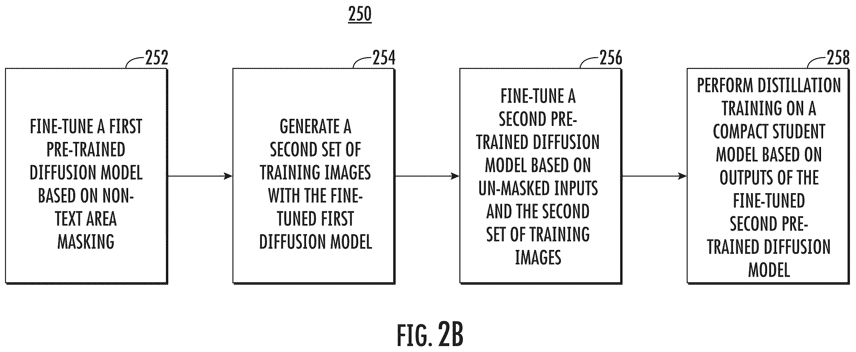

Figure 2B depicts a block diagram of an example distillation training process 250 for a compact model according to example embodiments of the present disclosure. Although Figure 2B depicts steps performed in a particular order for purposes of illustration and discussion, the methods of the present disclosure are not limited to the particularly illustrated order or arrangement. The various steps of the method 250 can be omitted, rearranged, combined, and/or adapted in various ways without deviating from the scope of the present disclosure.

At 252, a computing system can fine-tune a first pre-trained diffusion model based on non-text area masking. The fine-tuning based on non-text area masking can include masking portions of a first training image that do not include text. The model-generated image can then be compared to the ground truth image to evaluate a loss function to generate a gradient descent. The gradient descent can then be backpropagated to adjust one or more parameters of the first pre-trained diffusion model. For example, by masking non-text areas, the fine-tuning can involve real image ground truth evaluation. Therefore, the model can be trained to generate predicted pixels that match the real image pixels.

At 254, the computing system can generate a second set of training images with the fine-tuned first diffusion model. Generating the second set of training images can include processing images with text with the fine-tuned first pre-trained diffusion model to generate second training images without text. The second set of training images can include inpainted portions of the input images in which the inpainted portions were generated with the first pre-trained diffusion model.

At 256, the computing system can fine-tune a second pre-trained diffusion model based on un-masked inputs and the second set of training images. The fine-tuning of the second pre-trained diffusion model can include processing the input images from the previous step with the second pre-trained diffusion model to generate second model outputs that include predicted pixels to replace text from the input images. The second model outputs can be compared to the second set of training images to evaluate a loss function to generate a gradient descent. The gradient descent can then be backpropagated to adjust one or more parameters of the second pre-trained diffusion model.

At 258, the computing system can perform distillation training on a compact student model based on outputs of the fine-tuned second pre-trained diffusion model. Distillation training can include training the compact model to generate outputs that emulate the outputs of at least one of the fine-tuned first diffusion model or the second pre-trained diffusion model.

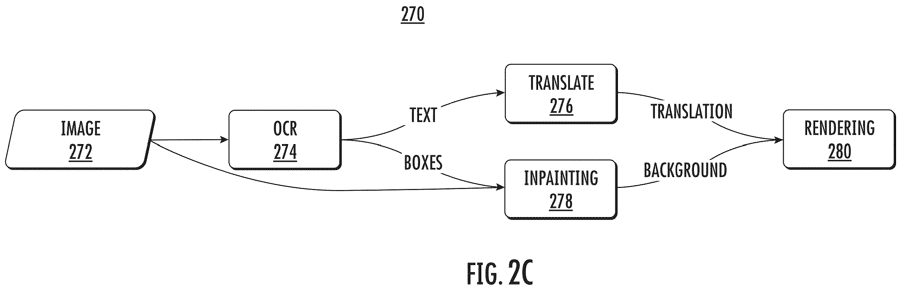

Figure 2C depicts a block diagram of an example model inference 270 for a text removal model according to example embodiments of the present disclosure. In particular, the trained text removal model to process an input image 272 with text in a first language to generate a model-generated rendering 280 that depicts the input image 272 with the text translated to a second language. For example, the input image 272 can be processed with an optical character recognition block 274 to generate text data descriptive of the text detected in the input image 272. The text data can then be processed with a translation block 276 (e.g., a language model trained for translations) to generate second text data descriptive of the text translated from the first language to the second language. In some implementations, the text data can include details associated with the original size, font, color, and/or other stylizations of the text to be retained and recreated when rendering the translated image.

The input image 272 can, in parallel or in series with the OCR and translation processing, be processed with an inpainting model 278 to generate a version of the input image 272 without text. In some implementations, the inpainting model 278 may obtain and process bounding box data generated with the optical character recognition block 274. The bounding boxes may be utilized as an attention input.

The translated text and the text-free version of the input image 272 can then be processed to generate the model-generated rendering 280.

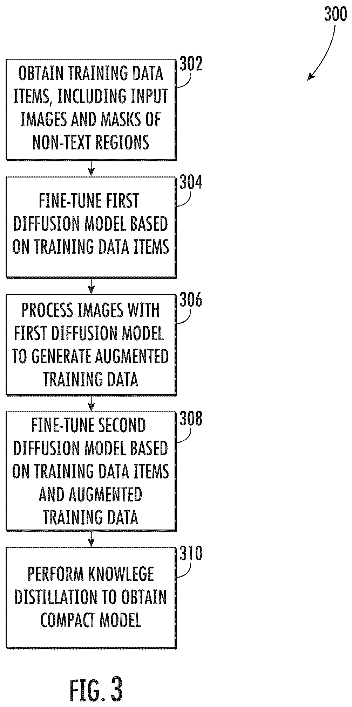

Figure 3 depicts a flow chart diagram of an example method 300 to perform training of a text removal model according to example embodiments of the present disclosure. Although Figure 3 depicts steps performed in a particular order for purposes of illustration and discussion, the methods of the present disclosure are not limited to the particularly illustrated order or arrangement. The various steps of the method 300 can be omitted, rearranged, combined, and/or adapted in various ways without deviating from the scope of the present disclosure.

At 302, a computing system can obtain a plurality of training data items. Each data item of the plurality of training data items can include an image input and a mask input. The input image can be any image with text regions and non-text regions. The mask input can be a binary image indicative of one or more areas to be masked. In some embodiments, the one or more areas to be masked includes areas of the image input without text.

At 304, the computing system can fine-tune a first pre-trained diffusion model to reconstruct masked areas of the image inputs of the plurality of training data items. The masked areas can be areas of the input image defined by the mask input that do not have text in the defined area. Fine-tuning the first pre-trained diffusion model can include tuning the first pre-trained diffusion model to recreate non-text areas in the input image given the masks defined by the mask input.

To fine-tune the first pre-trained diffusion model, a first training data item of the plurality of training data items can be input into the first pre-trained diffusion model and a model output from the first pre-trained diffusion model based on the first training data item can be received. The output can be evaluated based on a ground truth representation associated with the first training data item to obtain a loss term. The ground truth representation can be backgrounds in ground-truth bounding boxes, if available in the input image, or predicted bounding boxes of backgrounds if not. To identify the predicted bounding boxes, areas of text in the image input of each of the plurality of training data items can be identified using optical character recognition. Using optical character recognition, a bounding box for each area of text in the image input can be generated. The one or more areas to be masked can then be selected based on a non-text region of the input image, such as areas outside the generated bounding boxes.

The loss term can then be used to adjust, or fine-tune, the first pre-trained diffusion model. For example, one or more parameters, weights, hyperparameters, or the like of the first pre-trained diffusion model can be adjusted based on the loss term.

At 306, the computing system can process a plurality of first images that comprise text with a fine-tuned version of the first pre-trained diffusion model to generate a plurality of augmented first images. The plurality of augmented images can be descriptive of the plurality of first images with the text replaced with predicted background pixels.

At 308, the computing system can fine-tune a second pre-trained diffusion model using the plurality of first images and the plurality of augmented first images. The second pre-trained diffusion model can be configured to reconstruct the plurality of first augmented images without mask inputs.

Fine-tuning the second pre-trained diffusion model can also include processing the plurality of first images as inputs and evaluating outputs of the second pre-trained diffusion model based on the plurality of augmented first images. For example, this comparison can involve determining a loss term between the output of the second pre-trained diffusion model and a first augmented image, the loss term indicating how accurately the first augmented image was reproduced by the output. Based on this comparison and loss term, one or more parameters, weights, hyperparameters, or the like of the second pre-trained diffusion model can be adjusted.

At 310, the computing system can train a compact model via knowledge distillation based on outputs from a fine-tuned version of the second pre-trained diffusion model. The compact model can configured to receive as an input an inference image and an inference mask input and output a version of the inference image without text based on the inference mask input.

In some embodiments, the inference mask input can be a second binary image indicative of a second one or more areas to be masked. The second one or more areas to be masked can include areas of text in the inference image.

In some embodiments, the compact model can have at least four channels. The first three channels can be associated with red-green-blue values of the inference image. The fourth channel can be associated with the inference mask input.

In some embodiments, the inference mask input can be applied as an attention map for the compact model during inference performed by the compact model.

In some embodiments, the compact model can be trained using real and synthetic training data.

In some embodiments, training the compact model can include processing an input image using the first fine-tuned diffusion model and the second fine-tuned diffusion model to obtain a processed output. The output of the compact model can then be compared to the processed output to determine a distillation loss term. Based on this evaluation and distillation loss term, one or more parameters of the compact model can be adjusted.

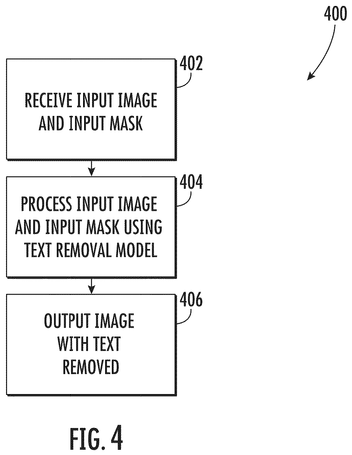

Figure 4 depicts a flow chart diagram of an example method 400 to text removal from an image according to example embodiments of the present disclosure. Although Figure 4 depicts steps performed in a particular order for purposes of illustration and discussion, the methods of the present disclosure are not limited to the particularly illustrated order or arrangement. The various steps of the method 400 can be omitted, rearranged, combined, and/or adapted in various ways without deviating from the scope of the present disclosure.

At 402, a computing system receives an input image and a mask input. The input image can be an RGB image that includes one or more text regions and one or more non-text regions. The mask input can be a binary image that defines one or more regions of the input image to remove text from and can be generated by a user selecting areas of the input image to remove text from.

At 404, the computing system can process the input image and mask input using a text removal model, such as the compact model described above. During processing, the compact model identifies text in the regions defined by the mask input and utilizes diffusion to replace the text in those regions with an inpainted background.

In some embodiments, the compact model can have at least four channels. The first three channels can be associated with red-green-blue values of the inference image. The fourth channel can be associated with the inference mask input.

In some embodiments, the inference mask input can be applied as an attention map for the compact model during inference performed by the compact model.

At 406, the computing system can output, from the text removal model, an image with text removed from the regions defined in the mask input.

The trained compact model can then be utilized for lightweight, low latency image inpainting for text removal. In some implementations, the compact model may be utilized for real-time text translation image augmentation. For example, an input image with text of a first language can be processed to identify text within the image. The text identification can be utilized to identify the text string and generate an OCR mask. The identified text string can be processed with a translation model to generate translated text of a second language. The input image and the OCR mask can be processed with the compact model to generate a text-removed image. The translated text can then be rendered within the text-removed image to generate a translated image.

In some implementations, the systems and methods of the present disclosure provide a number of technical effects and benefits. As one example, the system and methods can be utilized to remove one or more occlusions from an image and replace the occlusions with pixels copied from a neighboring area and/or based on other predictions. The systems and methods can predict pixels that can be accurate and may provide smooth transitions. Additionally and/or alternatively, the systems and methods can provide an output of the same or comparable resolution to the input.

Another example technical effect and benefit relates to improved computational efficiency and improvements in the functioning of a computing system. For example, a technical benefit of the systems and methods of the present disclosure is the ability to reduce the computational resources needed for replacing occlusions in an image with predicted data. In particular, the compact model can be computationally cheap, which can allow the systems and methods to be executed on a computing device with limited computational resources (e.g., a mobile computing device).

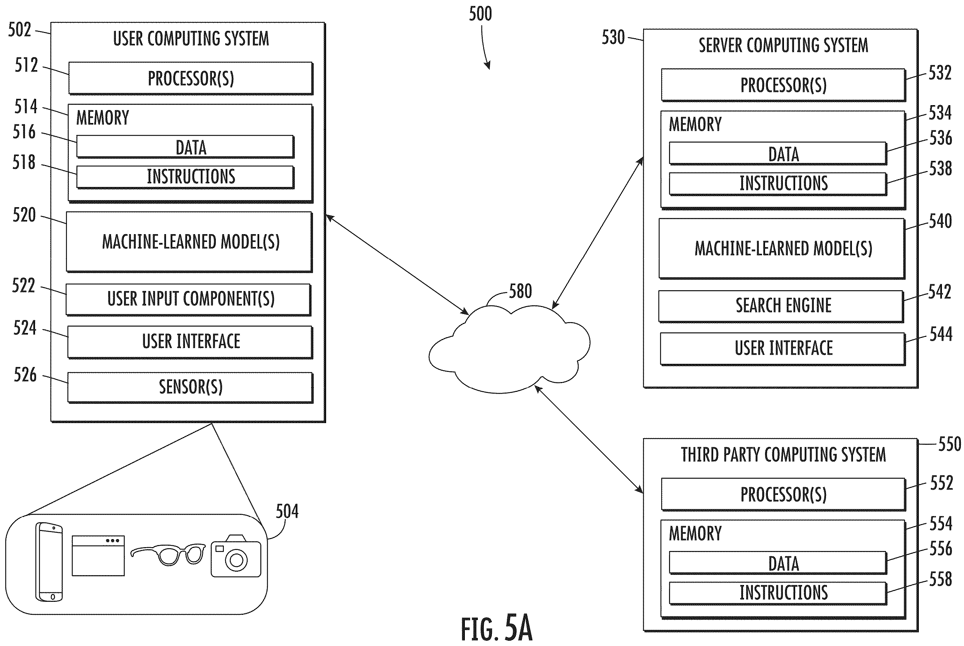

Figure 5A depicts a block diagram of an example computing system 500 that performs text removal from an image according to example embodiments of the present disclosure. The system 500 includes a user computing system 502, a server computing system 530, and/or a third computing system 550 that are communicatively coupled over a network 580.

The user computing system 502 can include any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing system 502 includes one or more processors 512 and a memory 514. The one or more processors 512 can be any suitable processing device (e.g., a processor core, a microprocessor, an ASIC, a FPGA, a controller, a microcontroller, etc.) and can be one processor or a plurality of processors that are operatively connected. The memory 514 can include one or more non-transitory computer-readable storage mediums, such as RAM, ROM, EEPROM, EPROM, flash memory devices, magnetic disks, etc., and combinations thereof. The memory 514 can store data 516 and instructions 518 which are executed by the processor 512 to cause the user computing system 502 to perform operations.

In some implementations, the user computing system 502 can store or include one or more machine-learned models 520. For example, the machine-learned models 520 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks.

In some implementations, the one or more machine-learned models 520 can be received from the server computing system 530 over network 580, stored in the user computing device memory 514, and then used or otherwise implemented by the one or more processors 512. In some implementations, the user computing system 502 can implement multiple parallel instances of a single machine-learned model 520 (e.g., to perform parallel machine-learned model processing across multiple instances of input data and/or detected features).

More particularly, the one or more machine-learned models 520 may include one or more detection models, one or more classification models, one or more segmentation models, one or more augmentation models, one or more generative models, one or more natural language processing models, one or more optical character recognition models, and/or one or more other machine-learned models. The one or more machine-learned models 520 can include one or more transformer models. The one or more machine-learned models 520 may include one or more neural radiance field models, one or more diffusion models, and/or one or more autoregressive language models.

The one or more machine-learned models 520 may be utilized to detect one or more object features. The detected object features may be classified and/or embedded. The classification and/or the embedding may then be utilized to perform a search to determine one or more search results. Alternatively and/or additionally, the one or more detected features may be utilized to determine an indicator (e.g., a user interface element that indicates a detected feature) is to be provided to indicate a feature has been detected. The user may then select the indicator to cause a feature classification, embedding, and/or search to be performed. In some implementations, the classification, the embedding, and/or the searching can be performed before the indicator is selected.

In some implementations, the one or more machine-learned models 520 can process image data, text data, audio data, and/or latent encoding data to generate output data that can include image data, text data, audio data, and/or latent encoding data. The one or more machine-learned models 520 may perform optical character recognition, natural language processing, image classification, object classification, text classification, audio classification, context determination, action prediction, image correction, image augmentation, text augmentation, sentiment analysis, object detection, error detection, inpainting, video stabilization, audio correction, audio augmentation, and/or data segmentation (e.g., mask based segmentation).

Additionally or alternatively, one or more machine-learned models 540 can be included in or otherwise stored and implemented by the server computing system 530 that communicates with the user computing system 502 according to a client-server relationship. For example, the machine-learned models 540 can be implemented by the server computing system 530 as a portion of a web service (e.g., a viewfinder service, a visual search service, an image processing service, an ambient computing service, and/or an overlay application service). Thus, one or more models 520 can be stored and implemented at the user computing system 502 and/or one or more models 540 can be stored and implemented at the server computing system 530.

The user computing system 502 can also include one or more user input component 522 that receives user input. For example, the user input component 522 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

In some implementations, the user computing system can store and/or provide one or more user interfaces 524, which may be associated with one or more applications. The one or more user interfaces 524 can be configured to receive inputs and/or provide data for display (e.g., image data, text data, audio data, one or more user interface elements, an augmented-reality experience, a virtual reality experience, and/or other data for display). The user interfaces 524 may be associated with one or more other computing systems (e.g., server computing system 530 and/or third party computing system 550). The user interfaces 524 can include a viewfinder interface, a search interface, a generative model interface, a social media interface, and/or a media content gallery interface.

The user computing system 502 may include and/or receive data from one or more sensors 526. The one or more sensors 526 may be housed in a housing component that houses the one or more processors 512, the memory 514, and/or one or more hardware components, which may store, and/or cause to perform, one or more software packets. The one or more sensors 526 can include one or more image sensors (e.g., a camera), one or more lidar sensors, one or more audio sensors (e.g., a microphone), one or more inertial sensors (e.g., inertial measurement unit), one or more biological sensors (e.g., a heart rate sensor, a pulse sensor, a retinal sensor, and/or a fingerprint sensor), one or more infrared sensors, one or more location sensors (e.g., GPS), one or more touch sensors (e.g., a conductive touch sensor and/or a mechanical touch sensor), and/or one or more other sensors. The one or more sensors can be utilized to obtain data associated with a user's environment (e.g., an image of a user's environment, a recording of the environment, and/or the location of the user).

The user computing system 502 may include, and/or be part of, a user computing device 504. The user computing device 504 may include a mobile computing device (e.g., a smartphone or tablet), a desktop computer, a laptop computer, a smart wearable, and/or a smart appliance. Additionally and/or alternatively, the user computing system may obtain from, and/or generate data with, the one or more one or more user computing devices 504. For example, a camera of a smartphone may be utilized to capture image data descriptive of the environment, and/or an overlay application of the user computing device 504 can be utilized to track and/or process the data being provided to the user. Similarly, one or more sensors associated with a smart wearable may be utilized to obtain data about a user and/or about a user's environment (e.g., image data can be obtained with a camera housed in a user's smart glasses). Additionally and/or alternatively, the data may be obtained and uploaded from other user devices that may be specialized for data obtainment or generation.

The server computing system 530 includes one or more processors 532 and a memory 534. The one or more processors 532 can be any suitable processing device (e.g., a processor core, a microprocessor, an ASIC, a FPGA, a controller, a microcontroller, etc.) and can be one processor or a plurality of processors that are operatively connected. The memory 534 can include one or more non-transitory computer-readable storage mediums, such as RAM, ROM, EEPROM, EPROM, flash memory devices, magnetic disks, etc., and combinations thereof. The memory 534 can store data 536 and instructions 538 which are executed by the processor 532 to cause the server computing system 530 to perform operations.

In some implementations, the server computing system 530 includes or is otherwise implemented by one or more server computing devices. In instances in which the server computing system 530 includes plural server computing devices, such server computing devices can operate according to sequential computing architectures, parallel computing architectures, or some combination thereof.

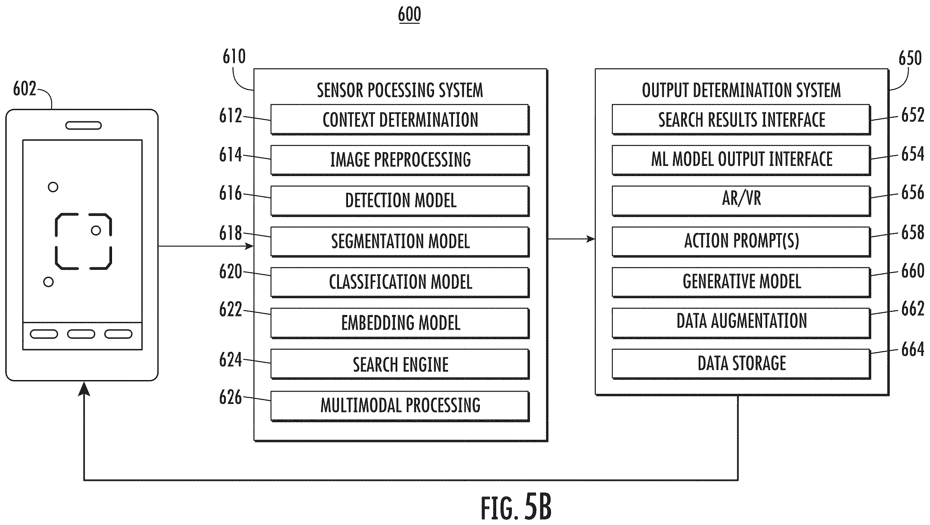

As described above, the server computing system 530 can store or otherwise include one or more machine-learned models 540. For example, the models 540 can be or can otherwise include various machine-learned models. Example machine-learned models include neural networks or other multi-layer non-linear models. Example neural networks include feed forward neural networks, deep neural networks, recurrent neural networks, and convolutional neural networks. Example models 540 are discussed with reference to Figure 5B.

Additionally and/or alternatively, the server computing system 530 can include and/or be communicatively connected with a search engine 542 that may be utilized to crawl one or more databases (and/or resources). The search engine 542 can process data from the user computing system 502, the server computing system 530, and/or the third party computing system 550 to determine one or more search results associated with the input data. The search engine 542 may perform term based search, label based search, Boolean based searches, image search, embedding based search (e.g., nearest neighbor search), multimodal search, and/or one or more other search techniques.

The server computing system 530 may store and/or provide one or more user interfaces 544 for obtaining input data and/or providing output data to one or more users. The one or more user interfaces 544 can include one or more user interface elements, which may include input fields, navigation tools, content chips, selectable tiles, widgets, data display carousels, dynamic animation, informational pop-ups, image augmentations, text-to-speech, speech-to-text, augmented-reality, virtual-reality, feedback loops, and/or other interface elements.

The user computing system 502 and/or the server computing system 530 can train the models 520 and/or 540 via interaction with the third party computing system 550 that is communicatively coupled over the network 580. The third party computing system 550 can be separate from the server computing system 530 or can be a portion of the server computing system 530. Alternatively and/or additionally, the third party computing system 550 may be associated with one or more web resources, one or more web platforms, one or more other users, and/or one or more contexts.

The third party computing system 550 can include one or more processors 552 and a memory 554. The one or more processors 552 can be any suitable processing device (e.g., a processor core, a microprocessor, an ASIC, a FPGA, a controller, a microcontroller, etc.) and can be one processor or a plurality of processors that are operatively connected. The memory 554 can include one or more non-transitory computer-readable storage mediums, such as RAM, ROM, EEPROM, EPROM, flash memory devices, magnetic disks, etc., and combinations thereof. The memory 554 can store data 556 and instructions 558 which are executed by the processor 552 to cause the third party computing system 550 to perform operations. In some implementations, the third party computing system 550 includes or is otherwise implemented by one or more server computing devices.

The network 580 can be any type of communications network, such as a local area network (e.g., intranet), wide area network (e.g., Internet), or some combination thereof and can include any number of wired or wireless links. In general, communication over the network 580 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

The machine-learned models described in this specification may be used in a variety of tasks, applications, and/or use cases.

In some implementations, the input to the machine-learned model(s) of the present disclosure can be image data. The machine-learned model(s) can process the image data to generate an output. As an example, the machine-learned model(s) can process the image data to generate an image recognition output (e.g., a recognition of the image data, a latent embedding of the image data, an encoded representation of the image data, a hash of the image data, etc.). As another example, the machine-learned model(s) can process the image data to generate an image segmentation output. As another example, the machine-learned model(s) can process the image data to generate an image classification output. As another example, the machine-learned model(s) can process the image data to generate an image data modification output (e.g., an alteration of the image data, etc.). As another example, the machine-learned model(s) can process the image data to generate an encoded image data output (e.g., an encoded and/or compressed representation of the image data, etc.). As another example, the machine-learned model(s) can process the image data to generate an upscaled image data output. As another example, the machine-learned model(s) can process the image data to generate a prediction output.

In some implementations, the input to the machine-learned model(s) of the present disclosure can be text or natural language data. The machine-learned model(s) can process the text or natural language data to generate an output. As an example, the machine-learned model(s) can process the natural language data to generate a language encoding output. As another example, the machine-learned model(s) can process the text or natural language data to generate a latent text embedding output. As another example, the machine-learned model(s) can process the text or natural language data to generate a translation output. As another example, the machine-learned model(s) can process the text or natural language data to generate a classification output. As another example, the machine-learned model(s) can process the text or natural language data to generate a textual segmentation output. As another example, the machine-learned model(s) can process the text or natural language data to generate a semantic intent output. As another example, the machine-learned model(s) can process the text or natural language data to generate an upscaled text or natural language output (e.g., text or natural language data that is higher quality than the input text or natural language, etc.). As another example, the machine-learned model(s) can process the text or natural language data to generate a prediction output.

In some cases, the input includes visual data and the task is a computer vision task. In some cases, the input includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

The user computing system 502 may include a number of applications (e.g., applications 1 through N). Each application may include its own respective machine learning library and machine-learned model(s). For example, each application can include a machine-learned model. Example applications include a text messaging application, an email application, a dictation application, a virtual keyboard application, a browser application, etc.

Each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

The user computing system 502 can include a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example a respective machine-learned model (e.g., a model) can be provided for each application and managed by the central intelligence layer. In other implementations, two or more applications can share a single machine-learned model. For example, in some implementations, the central intelligence layer can provide a single model (e.g., a single model) for all of the applications. In some implementations, the central intelligence layer is included within or otherwise implemented by an operating system of the computing system 500.

The central intelligence layer can communicate with a central device data layer. The central device data layer can be a centralized repository of data for the computing system 500. The central device data layer may communicate with a number of other components of the computing device, such as, for example, one or more sensors, a context manager, a device state component, and/or additional components. In some implementations, the central device data layer can communicate with each device component using an API (e.g., a private API).

Figure 5B depicts a block diagram of an example computing system 600 that performs text removal from images according to example embodiments of the present disclosure. In particular, the example computing system 600 can include one or more computing devices 602 that can be utilized to obtain, and/or generate, one or more datasets that can be processed by a sensor processing system 610 and/or an output determination system 650 to feedback to a user that can provide information on features in the one or more obtained datasets. The one or more datasets can include image data, text data, audio data, multimodal data, latent encoding data, etc. The one or more datasets may be obtained via one or more sensors associated with the one or more computing devices 602 (e.g., one or more sensors in the computing device 602). Additionally and/or alternatively, the one or more datasets can be stored data and/or retrieved data (e.g., data retrieved from a web resource). For example, images, text, and/or other content items may be interacted with by a user. The interacted with content items can then be utilized to generate one or more determinations.

The one or more computing devices 602 can obtain, and/or generate, one or more datasets based on image capture, sensor tracking, data storage retrieval, content download (e.g., downloading an image or other content item via the internet from a web resource), and/or via one or more other techniques. The one or more datasets can be processed with a sensor processing system 610. The sensor processing system 610 may perform one or more processing techniques using one or more machine-learned models, one or more search engines, and/or one or more other processing techniques. The one or more processing techniques can be performed in any combination and/or individually. The one or more processing techniques can be performed in series and/or in parallel. In particular, the one or more datasets can be processed with a context determination block 612, which may determine a context associated with one or more content items. The context determination block 612 may identify and/or process metadata, user profile data (e.g., preferences, user search history, user browsing history, user purchase history, and/or user input data), previous interaction data, global trend data, location data, time data, and/or other data to determine a particular context associated with the user. The context can be associated with an event, a determined trend, a particular action, a particular type of data, a particular environment, and/or another context associated with the user and/or the retrieved or obtained data.

The sensor processing system 610 may include an image preprocessing block 614. The image preprocessing block 614 may be utilized to adjust one or more values of an obtained and/or received image to prepare the image to be processed by one or more machine-learned models and/or one or more search engines 624. The image preprocessing block 614 may resize the image, adjust saturation values, adjust resolution, strip and/or add metadata, and/or perform one or more other operations.

In some implementations, the sensor processing system 610 can include one or more machine-learned models, which may include a detection model 616, a segmentation model 618, a classification model 620, an embedding model 622, and/or one or more other machine-learned models. For example, the sensor processing system 610 may include one or more detection models 616 that can be utilized to detect particular features in the processed dataset. In particular, one or more images can be processed with the one or more detection models 616 to generate one or more bounding boxes associated with detected features in the one or more images.

Additionally and/or alternatively, one or more segmentation models 618 can be utilized to segment one or more portions of the dataset from the one or more datasets. For example, the one or more segmentation models 618 may utilize one or more segmentation masks (e.g., one or more segmentation masks manually generated and/or generated based on the one or more bounding boxes) to segment a portion of an image, a portion of an audio file, and/or a portion of text. The segmentation may include isolating one or more detected objects and/or removing one or more detected objects from an image.

The one or more classification models 620 can be utilized to process image data, text data, audio data, latent encoding data, multimodal data, and/or other data to generate one or more classifications. The one or more classification models 620 can include one or more image classification models, one or more object classification models, one or more text classification models, one or more audio classification models, and/or one or more other classification models. The one or more classification models 620 can process data to determine one or more classifications.

In some implementations, data may be processed with one or more embedding models 622 to generate one or more embeddings. For example, one or more images can be processed with the one or more embedding models 622 to generate one or more image embeddings in an embedding space. The one or more image embeddings may be associated with one or more image features of the one or more images. In some implementations, the one or more embedding models 622 may be configured to process multimodal data to generate multimodal embeddings. The one or more embeddings can be utilized for classification, search, and/or learning embedding space distributions.

The sensor processing system 610 may include one or more search engines 624 that can be utilized to perform one or more searches. The one or more search engines 624 may crawl one or more databases (e.g., one or more local databases, one or more global databases, one or more private databases, one or more public databases, one or more specialized databases, and/or one or more general databases) to determine one or more search results. The one or more search engines 624 may perform feature matching, text based search, embedding based search (e.g., k-nearest neighbor search), metadata based search, multimodal search, web resource search, image search, text search, and/or application search.

Additionally and/or alternatively, the sensor processing system 610 may include one or more multimodal processing blocks 626, which can be utilized to aid in the processing of multimodal data. The one or more multimodal processing blocks 626 may include generating a multimodal query and/or a multimodal embedding to be processed by one or more machine-learned models and/or one or more search engines 624.

The output(s) of the sensor processing system 610 can then be processed with an output determination system 650 to determine one or more outputs to provide to a user. The output determination system 650 may include heuristic based determinations, machine-learned model based determinations, user selection based determinations, and/or context based determinations.

The output determination system 650 may determine how and/or where to provide the one or more search results in a search results interface 652. Additionally and/or alternatively, the output determination system 650 may determine how and/or where to provide the one or more machine-learned model outputs in a machine-learned model output interface 654. In some implementations, the one or more search results and/or the one or more machine-learned model outputs may be provided for display via one or more user interface elements. The one or more user interface elements may be overlayed over displayed data. For example, one or more detection indicators may be overlayed over detected objects in a viewfinder. The one or more user interface elements may be selectable to perform one or more additional searches and/or one or more additional machine-learned model processes. In some implementations, the user interface elements may be provided as specialized user interface elements for specific applications and/or may be provided uniformly across different applications. The one or more user interface elements can include pop-up displays, interface overlays, interface tiles and/or chips, carousel interfaces, audio feedback, animations, interactive widgets, and/or other user interface elements.

Additionally and/or alternatively, data associated with the output(s) of the sensor processing system 610 may be utilized to generate and/or provide an augmented-reality experience and/or a virtual-reality experience 656. For example, the one or more obtained datasets may be processed to generate one or more augmented-reality rendering assets and/or one or more virtual-reality rendering assets, which can then be utilized to provide an augmented-reality experience and/or a virtual-reality experience 656 to a user. The augmented-reality experience may render information associated with an environment into the respective environment. Alternatively and/or additionally, objects related to the processed dataset(s) may be rendered into the user environment and/or a virtual environment. Rendering dataset generation may include training one or more neural radiance field models to learn a three-dimensional representation for one or more objects.

In some implementations, one or more action prompts 658 may be determined based on the output(s) of the sensor processing system 610. For example, a search prompt, a purchase prompt, a generate prompt, a reservation prompt, a call prompt, a redirect prompt, and/or one or more other prompts may be determined to be associated with the output(s) of the sensor processing system 610. The one or more action prompts 658 may then be provided to the user via one or more selectable user interface elements. In response to a selection of the one or more selectable user interface elements, a respective action of the respective action prompt may be performed (e.g., a search may be performed, a purchase application programming interface may be utilized, and/or another application may be opened).

In some implementations, the one or more datasets and/or the output(s) of the sensor processing system 610 may be processed with one or more generative models 660 to generate a model-generated content item that can then be provided to a user. The generation may be prompted based on a user selection and/or may be automatically performed (e.g., automatically performed based on one or more conditions, which may be associated with a threshold amount of search results not being identified).

The output determination system 650 may process the one or more datasets and/or the output(s) of the sensor processing system 610 with a data augmentation block 662 to generate augmented data. For example, one or more images can be processed with the data augmentation block 662 to generate one or more augmented images. The data augmentation can include data correction, data cropping, the removal of one or more features, the addition of one or more features, a resolution adjustment, a lighting adjustment, a saturation adjustment, and/or other augmentation.

In some implementations, the one or more datasets and/or the output(s) of the sensor processing system 610 may be stored based on a data storage block 664 determination.

The output(s) of the output determination system 650 can then be provided to a user via one or more output components of the user computing device 602. For example, one or more user interface elements associated with the one or more outputs can be provided for display via a visual display of the user computing device 602.

The processes may be performed iteratively and/or continuously. One or more user inputs to the provided user interface elements may condition and/or affect successive processing loops.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

## Claims

1. A computer-implemented method for generating an inpainting model, the method comprising:
obtaining, by a computing system, a plurality of training data items, each data item of the plurality of training data items comprising an image input and a mask input, the mask input comprising a binary image indicative of one or more areas to be masked, the one or more areas to be masked comprise areas of the image input without text, wherein the image input comprises text regions and non-text regions;
fine-tuning, by the computing system, a first pre-trained diffusion model to reconstruct masked areas of the image inputs of the plurality of training data items, wherein the masked areas comprise the areas masked by the mask inputs;
processing, by the computing system, a plurality of first images that comprise text with a fine-tuned version of the first pre-trained diffusion model to generate a plurality of augmented first images, wherein the plurality of augmented first images are descriptive of the plurality of first images with the text replaced with predicted background pixels; and
fine-tuning, by the computing system, a second pre-trained diffusion model using the plurality of first images and the plurality of augmented first images, the second pre-trained diffusion model configured to reconstruct the plurality of augmented first images without mask inputs, wherein fine-tuning the second pre-trained diffusion model comprises processing the plurality of first images as inputs and evaluating outputs of the second pre-trained diffusion model based on the plurality of augmented first images.

2. The computer-implemented method of claim 1, the method further comprising:
training, by the computing system, a compact model via knowledge distillation based on outputs from a fine-tuned version of the second pre-trained diffusion model, the compact model configured to receive as an input an inference image and an inference mask input and output a version of the inference image without text based on the inference mask input.

3. The computer-implemented method of claim 2, the method further comprising:
training, by the computing system, the compact model using real and synthetic training data.

4. The computer-implemented method of claim 2, wherein the compact model has at least four channels, the first three channels being associated with red-green-blue values of the inference image and the fourth channel being associated with the inference mask input.

5. The computer-implemented method of claim 2, wherein the inference mask input is applied as an attention map for the compact model during inference performed by the compact model.

6. The computer-implemented method of claim 2, wherein the inference mask input is a second binary image indicative of a second one or more areas to be masked, the second one or more areas to be masked comprising areas of text in the inference image.

7. The computer-implemented method of claim 1, wherein fine-tuning the first pre-trained diffusion model comprises:
inputting, by the computing system, a first training data item of the plurality of training data items into the first pre-trained diffusion model;
receiving, by the computing system, a model output from the first pre-trained diffusion model based on the first training data item;
evaluating, by the computing system, the model output based on a ground truth representation associated with the first training data item to obtain a loss term; and
adjusting, by the computing system, the first pre-trained diffusion model based on the loss term.

8. The computer-implemented method of claim 1, the method further comprising:
identifying, by the computing system, areas of text in the image input of each of the plurality of training data items using optical character recognition; and
selecting, by the computing system, the one or more areas to be masked based on a non-text region.

9. The computer-implemented method of claim 8, wherein identifying the areas of text in the image input of each of the plurality of training data items comprises:
generating, by the computing system, a bounding box for each area of the areas of text in the image input; and
selecting, by the computing system, the one or more areas to be masked by selecting areas outside of the bounding box associated with each area of the areas of text.

10. The computer-implemented method of any preceding claim, wherein the first pre-trained diffusion model and the second pre-trained diffusion model were pre-trained on the same training dataset.

11. The computing system of claim 10, the operations further comprising:
processing an input image using the first fine-tuned diffusion model and the second fine-tuned diffusion model to obtain a processed output.

12. The computing system of claim 11, the operations further comprising:
evaluating an output of the compact model based on the processed output.

13. The computing system of claim 11, the operations further comprising:
adjusting one or more parameters of the compact model based on the evaluation of the output of the compact model.

14. A computing system, comprising:
one or more processors; and
a non-transitory, computer-readable medium comprising instructions that, when executed by the one or more processors, cause the one or more processors to perform operations, the operations comprising the method of any preceding claim.

15. A non-transitory computer-readable medium comprising instructions that, when executed by one or more processors, cause the one or more processors to perform operations, the operations comprising a method according to any one of claims 1 to 13.
